**Europäisches Patentamt**

**European Patent Office**

**Office européen des brevets**

(19)

(11) Veröffentlichungsnummer: **0 142 471**

**A2**

(12) # EUROPÄISCHE PATENTANMELDUNG

(21) Anmeldenummer: **84810538.3**

(22) Anmeldetag: **05.11.84**

(51) Int. Cl.⁴: **A 01 G 9/00**

(30) Priorität: **09.11.83 CH 6025/83**

(43) Veröffentlichungstag der Anmeldung:
**22.05.85 Patentblatt 85/21**

(84) Benannte Vertragsstaaten:
**AT DE**

(71) Anmelder: **Gerber, Werner**
**Quartierweg 7**
**CH-3303 Jegenstorf(CH)**

(72) Erfinder: **Gerber, Werner**
**Quartierweg 7**
**CH-3303 Jegenstorf(CH)**

(54) **Mehrzweck-Pflanzenschale und Untersatz dafür.**

(57) Die nach aussen geneigte Seitenwandung dieser Mehrzweck- Pflanzenschale weist mehrere Ausbuchtungen (5) auf. Dadurch wird es möglich; mehrere Schalen winkelversetzt unmittelbar aufeinander zu einem Bepflanzungsturm aufzubauen. In einer Bodenverstärkung und am oberen Schalenrand sind Organe (12,13) vorgesehen, welche die übereinander liegenden Schalen in einer solchen gegenseitigen Winkellage fixieren, dass die Bepflanzungsflächen (25) dieser Schalen sich nicht überdecken.

Fig. 2

EP 0 142 471 A2

Croydon Printing Company Ltd

**0142471**
BEZEICHNUNG GEÄNDERT
Siehe Titelseite

Mehrzweck- Pflanzenschale

Die Erfindung bezweckt eine Pflanzenschale zu schaffen, die vielseitig verwendbar ist, z.B. als separat aufzustellende Schale mit Untersatz, als Stehschale, als Hängeschale und insbesondere als Bauelement für einen Pflanzenturm durch aufeinanderstellen mehrerer solcher Schalen.

Es sind Blumenständer bekannt, die in der DOS Nr. 25 40 038 dargestellt und beschrieben werden. Der darin beschriebene Blumenständer wird aus Beton, die einzuhängenden Schalen aus Leichtbeton gefertigt, diese Art ist schwer, braucht viel Platz und eignet sich für die industrielle Herstellung weniger gut.

Weiter bekannt ist der im CH- Patent Nr. 514 979 beschriebene und dargestellte Pflanzenturm, dieser Bepflanzbehälter, vorwiegend ohne Boden, beispielsweise aus Polystyrolschaum hergestellt, ist sehr sperrig, leicht verletzlich und als Einzelschale nicht so gut anwendbar

Es ist dem Erfinder auch der im CH- Patent Nr. 582 984 gezeichnete und beschriebene Mehrzwecktopf mit Flüssigkeitsbehälter für Erd- und Hydropflanzenkulturen bekannt. Dieser Topf hat einbaubare Saugorgane, die auch als Stützbeine dienen, um in eine weitere Schale gestellt, ein Reservoir abzugrenzen. Ohne die als Stützen ausgebildeten Saugorgane kann der obere Behälter auch als Pflanzentopf verwendet werden, hat aber dann den Nachteil, die Pflanzen nicht mehr kontrolliert mit Wasser zu versorgen.

Gegenüber diesen bekannten Anordnungen stellt sich die Erfindung die Aufgabe, eine Pflanzenschale zu schaffen, die wie eingangs erwähnt vielseitig verwendbar ist. Insbesondere sollen diese Schalen durch Ineinanderstellen platzsparend gelagert werden können und durch direktes Aufeinanderstellen Schalen auf Schalen den Aufbau eines Bepflanzungsturmes ermöglichen; bei dem sich die bepflanzten Flächen der übereinander angeordneten Schalen nicht überdecken und jede Schale individuell begossen werden kann. Der ganze Turmaufbau soll durch ein zentrales Halteorgan stabilisierbar sein und ferner müssen die Schalen durch Fixierelemente in der günstigsten gegenseitigen Winkellage gehalten werden.

Diese Aufgabe wird durch die im Patentanspruch 1 gekennzeichnete Mehrzweck- Pflanzenschale gelöst.

Ein Ausführungs beispiel der Erfindung wird nachfolgend anhand der Zeichnungen näher erläutert. In diesen zeigen:

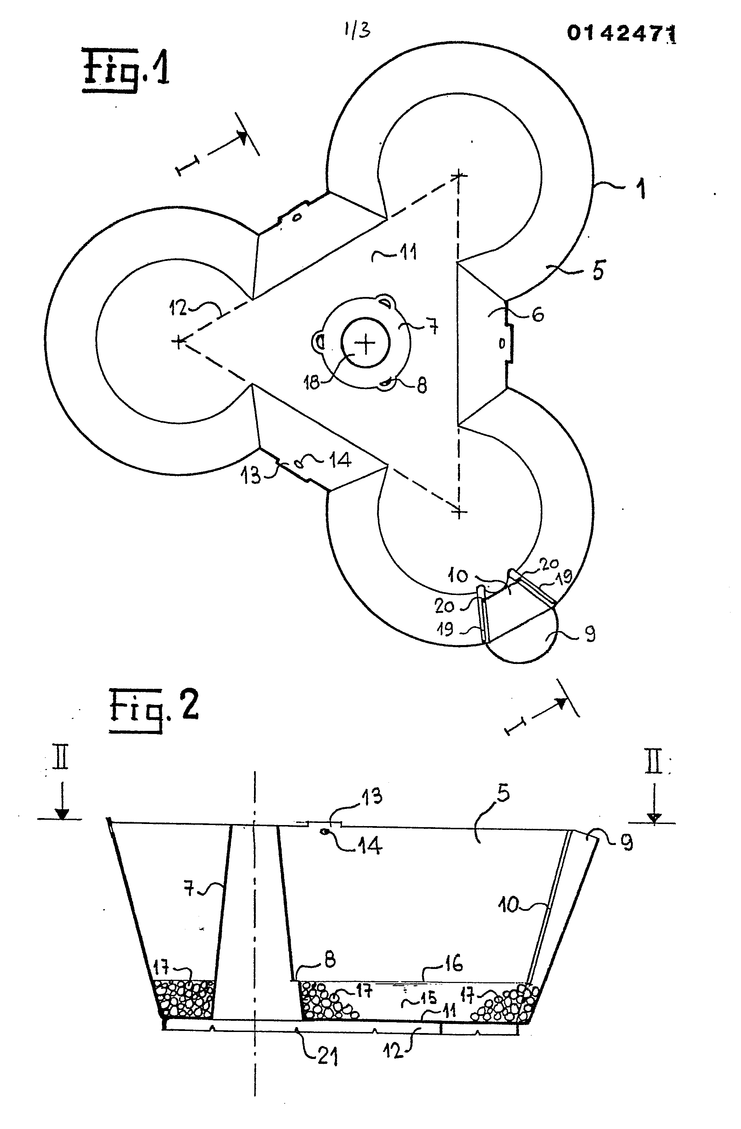

Fig. 1 eine Draufsicht auf eine der möglichen Grundrissformen

Fig. 2 einen Querschnitt längs der Linie I – I von Fig. 1

Fig. 3 eine perspektivische Ansicht der Pflanzenschale

Fig. 4 eine perspektivische Ansicht eines Untersatzes für die Schale

Fig. 5 eine perspektivische Ansicht des Haltestabes

Fig. 6 eine perspektivische Ansicht des Abdeckdrehverschlusses

Fig. 7   einen Querschnitt durch die mit dem Untersatz zusammengebaute Pflanzenschale

Fig. 8   schematisch eine Draufsicht auf zwei aufeinandergestellte Schalen mit den freistehenden Bepflanzungsflächen

Fig. 9   eine Draufsicht entsprechend Fig. 8 mit einer anderen Grundrissform der Ausbuchtungen

Die aus UV- stabilisiertem Kunststoff, vorwiegend von dunkelbrauner Farbe, in geringer Wandstärke gespritzte Mehrzweck- Pflanzenschale 1 hat mehrere, mindestens aber drei, im Grundriss ovale, rundr oder mehreckige seitliche Ausbuchtungen 5, die durch ebene oder gewölbte Zwischenteile 6 mit einander verbunden sind. Die gesamte Wandung 5,6 sowie auch der Einfüllstutzen 9 sind so nach aussen geneigt, dass die Schalen für die Zwecke der Lagerung rationell ineinander gestapelt werden können, entsprechend ist auch die im Zentrum angeordnete Haltehülse 7 als ein sich nach oben verjüngender Konus ausgebildet.

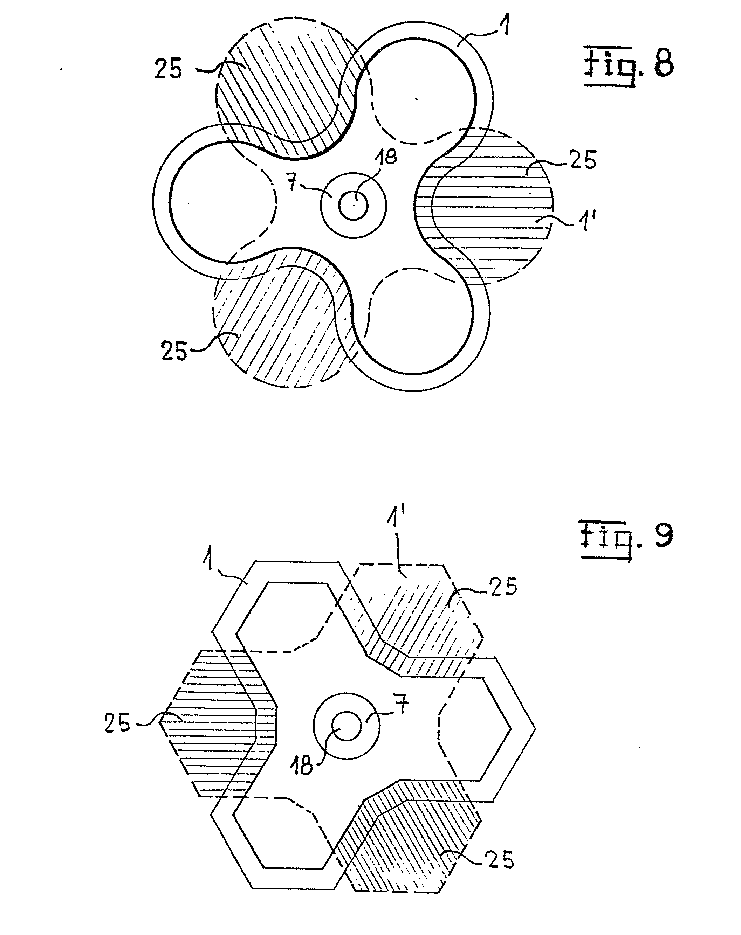

Dank des Vorhandenseins der Ausbuchtungen 5 können mehrere solcher Pflanzenschalen, winkelversetzt gegeneinander, direkt aufeinandergestellt werden. Beim Vorhandensein von drei Ausbuchtungen 5 beträgt dieser Versetzungswinkel etwa 60°, wie dies für zwei Schalen 1,1`in den Figuren 8 und 9 schematisch dargestellt ist.

Die Haltehülse 7 übernimmt beim Aufschichten mehrerer Pflanzenschalen durch Einschieben eines Haltestabes 18 und Fixieren mit einer oberen Verrichtung oder Einrammen in das Erdreich, zusammen die seitliche Stabilität dieses Bepflanzungsturmes.

Die Rippen 12 in der zurückgesetzten Bodenverstärkung dienen zusammen mit den nach oben abgesetzten Nocken 13, die übereinander geschichteten Pflanzenschalen 1, in der richtigen, vorbestimmten gegenseitigen Winkellage zu halten, so dass die Bepflanzungsflächen 25 (Fir. 8,9) immer richtig und frei liegen.

Durch Anbringen, von unten nach oben, konisch abstehenden oder einspringenden Wasserüberläufe 8, seitlich an der Haltehülse 7, kann in einem unteren Bereich 15 der Schale, der mit Blähton gefüllt ist oder gegen das Absinken der Pflanzenerde mit einem Vlies 16 abgedeckt ist, ein vorbestimmter Wasserspiegel aufrechterhalten werden. Der Einfüllstutzen 9 mit der Zunge 10 ermöglichen es, dem Reservoir 15 Wasser zuzuführen ohne die bepflanzte Blumenerde zu berühren, was eine länger locker bleibende und luftdurchlässigere Blumenerde und dadurch ein besseres Wachstum der Pflanzen ermöglichen.

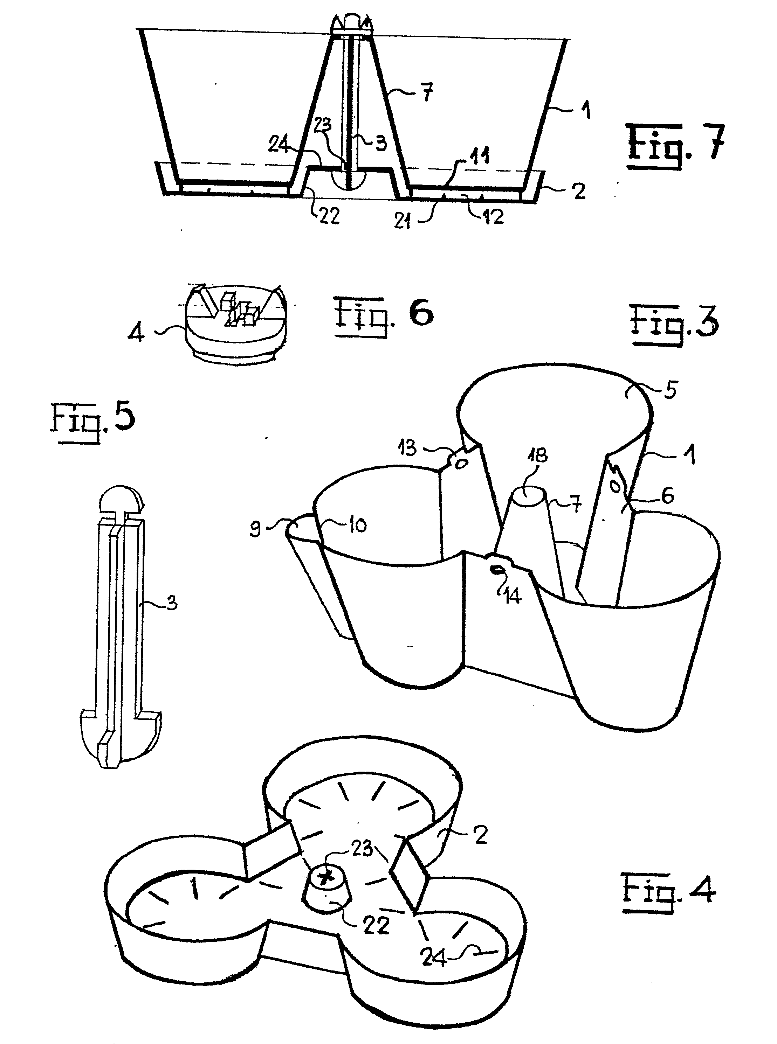

Die Pflanzenschale 1 kann auch einzeln zusammen mit dem Untersatz 2 im Zimmer aufgestellt werden. Dieser Untersatz 2 wird wie aus den Figuren 5-7 ersichtlich mittels eines Haltestabes 3 gegen den Boden der Pflanzenschale gedrückt, so dass Schale 1 und Untersatz 2 eine Einheit bildet. Der Haltestab 3 hat einen kreuzförmigen Querschnitt und wird von unten her durch den Kreuzschlitz 23 in dem zentrisch am Untersatz 2 angeordnetten Kegelstumpf 22 geführt. Zur Verbindung des Haltestabes 3 mit der Hülse 7 der Pflanzenschale 1 dient der in Fig.6 gezeigte Abdeckdrehverschluss 4, der ein leichtes Lösen von Schale und Untersatz 2 ermöglicht.

**0142471**

Eine mit dem Untersatz 2 verbundene Schale 1 kann beispielsweise auch an in der Schelenwand vorgesehenen Löchern 14 mittels dreier Ketten in einem Zimmer oder auf dem Balkon
als Pflanzenampel aufgehängt werden.

Patentansprüche

1. Mehrzweck- Pflanzenschale, dadurch gekennzeichnet, dass sie aus Kunststoff besteht und meherere im Grundriss ovale, runde oder mehreckige Ausbuchtungen (5) ihrer Seitenwände (5,6) aufweist, ferner eine konische, nach oben hin verjüngte, zentral angeordnete Hülse (7) zur Aufnahme eines Halteorgans (18), wobei Boden und Oberrand der Pflanzenschale derart ausgebildet sind, dass mehrere Schalen winkelversetzt zueinander zu einem Turm aufeinandergesetzt werden können, so dass die Bepflanzungsflächen (25) übereinanderliegender Schalen des Turmes sich nicht überdecken und wobei am oberen Schalenrand und am Boden Organe (12,13) vorgesehen sind, welche die übereinandergestellten Schalen in ihrer Winkelversetzten Lage fixieren.

2. Mehrzweck- Pflanzenschale nach Patentanspruch 1, dadurch gekennzeichnet, dass die nach aussen geneigten, die Ausbuchtungen (5) verbindenden Wandteile (6) eben oder Gewölbt sind.

3. Mehrzweck- Pflanzenschale nach Patentanspruch 1, dadurch gekennzeichnet, dass die genannten Fixier- Organe (12,13) durch am oberen Rand der Aussenwände (5,6) nach oben abgesetzte Nocken (13) gebildet sind, denen die Aufgabe zufällt, die darüber angeordneten Pflanzenschalen durch Einrasten in eine Bodenverstärkung so fest zu halten, dass die Bepflanzungsflächen (25) frei und richtig liegen.

4. Mehrzweck- Pflanzenschale nach Patentanspruch 1, gekennzeichnet durch Löcher in den verbindenden Wandungsteilen (6) zur Aufnahme einer Aufhängevorrichtung, beispielsweise einer Kette.

5. Mehrzweck- Pflanzenschale nach Patentanspruch 3, dadurch gakennzeichnet, dass die gegenüber den Aussenwänden und einem Einfüllstutzen (9) leicht zurückgesetzte Bodenverstärkung (12) rippen aufweist, die für die Aufnahme und Einrastung der Nocken (13) ausgebildet sind.

6. Mehrzweck- Pflanzenschale nach den Patentansprüchen 1 und 5, dadurch gekennzeichnet, dass in der Bodenverstärkung (12) kleine Aussparungen den Wasserdurchgang ermöglichen.

7. Untersatz zur Verwendung mit einer Mehrzweck- Pflanzenschale nach Patentanspruch 1, dadurch gekennzeichnet, dass ein Haltestab (3) mit Abdeckdrehverschluss (4) vorgesehen ist, mit dem Untersatz (2) für das Reinigen und Entleeren leicht lösbar verbunden ist.

Fig.1

Fig.2

0142471

Fig. 7

Fig. 6

Fig. 3

Fig. 5

Fig. 4

Fig. 8

Fig. 9